Europäisches Patentamt

European Patent Office

Office européen des brevets

(19)

(11) Veröffentlichungsnummer: **0 391 075**

**A2**

## (12) EUROPÄISCHE PATENTANMELDUNG

(21) Anmeldenummer: **90104156.6**

(22) Anmeldetag: **03.03.90**

(51) Int. Cl.⁵: **F16F 9/04**

(30) Priorität: **08.03.89 DE 3907462**

(43) Veröffentlichungstag der Anmeldung:
**10.10.90 Patentblatt 90/41**

(84) Benannte Vertragsstaaten:
**AT BE CH DE ES FR GB GR IT LI LU NL SE**

(71) Anmelder: **Continental Aktiengesellschaft**
**Königsworther Platz 1**
**D-3000 Hannover 1(DE)**

(72) Erfinder: **Gawinski, Hubertus, Dipl.-Ing.**
**Schlachterstrasse 7**
**D-3160 Lehrte(DE)**
Erfinder: **Wenzel, Detlef, Dipl.-Ing.**

**Lönswinkel 4**
**D-3002 Wedemark 15(DE)**
Erfinder: **Massmann, Carsten, Dipl.-Ing.**
**Walderseestrasse 38**
**D-3000 Hannover 1(DE)**
Erfinder: **Drescher, Gunter, Dipl.-Ing.**
**Peperfeld 76**
**D-3000 Hannover 91(DE)**
Erfinder: **Schneider, Eckhard, Dr.-Ing.**
**Sauerweg 31**
**D-3160 Lehrte(DE)**
Erfinder: **Thurow, Gerhard, Dipl.-Ing.**
**Malchensbrücke 7B**
**D-3008 Garbsen 1(DE)**

(54) **Rollbalg-Luftfeder.**

(57) Die Erfindung betrifft eine Rollbalg-Luftfeder, deren Abrollkolben sich gegenüber koventionellen Ausführungen durch geringeres Gewicht und verminderte Materialkosten auszeichnet. Dies wird durch eine Unterdimensionierung der Abrollkolbenwandung erreicht, die durch einen im Innenraum des Abrollkolbens erzeugten Überdruck kompensiert wird.

EP 0 391 075 A2

## Rollbalg-Luftfeder

Die Erfindung betrifft eine Rollbalg-Luftfeder gemäß dem Oberbegriff des Patentanspruchs 1. Derartige Luftfedern sind in einer Vielzahl von Ausführungsformen bekannt und haben sich u.a. als Fahrzeugfederungen, insbesondere zur Abfederung der Radachsen von Lastkraftwagen und Autobussen, in der Praxis in großem Umfang bewährt.

Im Zusammenhang mit den Bemühungen, zum einen die Herstellkosten eines Aggregates wie beispielsweise eines Kraftfahrzeuges durch Auswahl preisgünstiger Werkstoffe zu reduzieren sowie das Aggregatgewicht bei vorgegebenem Gesamtgewicht zugunsten der aufnehmbaren Nutzlast zu vermindern und zum anderen die Federungseigenschaften, insbesondere durch Verringerung der ungefederten Massen, zu verbessern, stellte sich die der vorliegenden Erfindung zugrundeliegende Aufgabe, eine Rollbalg-Luftfeder zu schaffen, die sich bei geringen Herstellkosten durch geringes Gewicht, hohe Belastbarkeit und optimale Federeigenschaften auszeichnet.

Diese Aufgabe wird gemäß der vorliegenden Erfindung durch eine Rollbalg-Luftfeder der eingangs genannten Gattung gelöst, die die im kennzeichnenden Teil des Patentanspruchs 1 angegebenen Merkmale aufweist. In den Unteransprüchen sind vorteilhafte Ausführungsformen und Weiterbildungen der Erfindung gekennzeichnet.

Bei den in der Vergangenheit durchgeführten Versuchen, insbesondere am Abrollkolben von Rollbalg-Luftfedern Gewichtseinsparungen zu erzielen, hatte sich gezeigt, daß die Verwendung leichterer Werkstoffe und geringerer Wandstärken im allgemeinen zu einer Verringerung der mechanischen Festigkeitswerte der Wandung des Abrollkolbens führte, so daß dieser den in der Praxis auftretenden Belastungen nicht mehr gewachsen war. Es traten nämlich in dem Bereich des Abrollkolbenmantels, auf dem sich der Rollbalg beim Einfedern über seine Rollfalte abstützt, Verformungen und Brüche der Mantelwandung auf.

Die vorliegende Erfindung schlägt in Abkehr von der dem Fachmann zur Vermeidung solcher Defekte nächstliegenden Möglichkeit überraschenderweise nicht eine den auftretenden Belastungen entsprechende stärkere Dimensionierung der Mantelwandung des Abrollkolbens vor, sondern löst die gestellte Aufgabe dadurch, daß der Innenraum des Abrollkolbens in an sich bekannter Weise luftdicht verschlossen und mit einem Überdruck gefüllt wird, der den von außen, insbesondere im Bereich der Rollfalte, auf die Mantelwandung gerichteten Kräften entgegenwirkt und diese teilweise kompensiert. Das heißt, die Mantelwandung des Abrollkolbens einer erfindungsgemäßen Rollbalg-Luftfeder ist im Vergleich zu den auf die Mantelwandung gerichteten äußeren Kräften bewußt unterdimensioniert ausgeführt, und zwar in dem Maße, in dem diese Kräfte von den durch den Innendruck erzeugten Gegenkräften aufgefangen werden.

Vorzugsweise wird der Innendruck im Abrollkolben dadurch erzeugt, daß der nach außen abgedichtete Abrollkolben-Innenraum über mindestens eine Öffnung mit dem Innenraum des Rollbalges in Druckverbindung steht, so daß unter allen Betriebsbedingungen in beiden Innenräumen derselbe Druck herrscht. Dies bringt den weiteren wesentlichen Vorteil mit sich, daß den im praktischen Betrieb auftretenden dynamischen Änderungen der äußeren Belastung genau entsprechende Gegenkräfte aufgrund der belastungsproportionalen Erhöhung des Innendruckes in jedem Betriebszustand entgegenwirken. Das heißt, jede Erhöhung der äußeren Belastung und insbesondere alle im dynamischen Betrieb auftretenden Belastungsspitzen werden automatisch durch die damit verbundene Erhöhung des Druckes im Innenraum des Rollbalges und des Abrollkolbens und die dadurch an der Abrollkolben-Innenwand erzeugten Gegenkräfte kompensiert. Da die Änderungen der von außen und von innen am Abrollkolbenmantel angreifenden Kräfte synchron ablaufen, ist die angestrebte Kompensationswirkung jederzeit gewährleistet.

Überraschenderweise hat sich gezeigt, daß damit ohne zusätzliche konstruktive Maßnahmen eine Reduzierung der Wandstärke des Abrollkolbenmantels um bis zu 50% möglich ist, die zur Gewichtsreduzierung genutzt werden kann.

Die vorliegende Erfindung eröffnet der Verwendung von Kunststoffen und der Ausnutzung der kunststoffspezifischen Herstellungs-, Gewichts- und anderen Gebrauchsvorteile für Luftfeder-Abrollkolben ganz neue Möglichkeiten. Es können sowohl thermoplastische als auch duroplastische Werkstoffe zur Anwendung kommen, die vorzugsweise durch eingelagerte Fasern, insbesondere Glasfasern, verstärkt sind. Dabei ist es zweckmäßig, die Fasern so anzuordnen, daß sie überwiegend in Umfangsrichtung der Mantelwandung des Abrollkolbens verlaufen.

In einer bevorzugten Ausführungsform enthält der Abrollkolben einen zentrischen Stempel, über den sich sein dem Rollbalg zugewandter Mittelteil gegenüber seiner Aufstandsfläche abstützt. Dieser Stempel ist vorzugsweise konisch, sich in Richtung des besagten Mittelteiles verjüngend ausgebildet, so daß er sowohl in Richtung der Rollbalgachse als auch schräg dazu auf ihn einwirkende Kräfte aufnehmen kann und er dem Abrollkolben zusätzliche axiale und seitliche Stabilität verleiht. Insbesondere unter fertigungstechnischen Gesichtspunkten ist es vorteilhaft, den Abrollkolben so auszubilden, daß einerseits seine Mantelwandung und der obere Mittelteil und andererseits sein unterer Verschluß und der besagte Stempel jeweils einstückig geformt und die beiden Formteile dichtend fest miteinander verbunden sind.

Die Öffnung bzw. die Öffnungen, über die die Innenräume des Abrollkolbens und des Rollbalges miteinander in Verbindung stehen und durch die der Luftaustausch sowie die Druckübertragung zwischen den beiden Innenräumen stattfindet, ist (sind) zweckmäßig als Ströfmungsdrossel(n) ausgebildet, wodurch sie eine Dämpfung der Ein- und Ausfederbewegungen bewirken.

In Weiterbildung des Erfindungsgedankens kann die Wandstärke des Abrollkolbenmantels zusätzlich dadurch verringert werden, daß man im Abrollkolben-Innenraum ein luftdurchlässiges formsteifes Stützgerüst anbringt, das ebenso wie der im Innern des Abrollkolbens herrschende Überdruck den von außen auf den Abrollkolbenmantel einwirkenden Kräften entgegengerichtet ist und somit den Innenluftdruck in seiner Stützfunktion ergänzt. Neben der Möglichkeit, ein solches Stützgerüst in Form eines Gitterwerks oder angeformter Stützrippen zu realisieren, besteht eine besonders vorteilhafte Variante darin, den Abrollkolben-Innenraum mit einem offenporigen Hartschaum oder aber einer dichten Packung harter, beispielsweise kugelförmiger Partikel auszufüllen, die sich aneinander abstützen, ohne den freien Luftdurchtritt wesentlich zu beeinträchtigen.

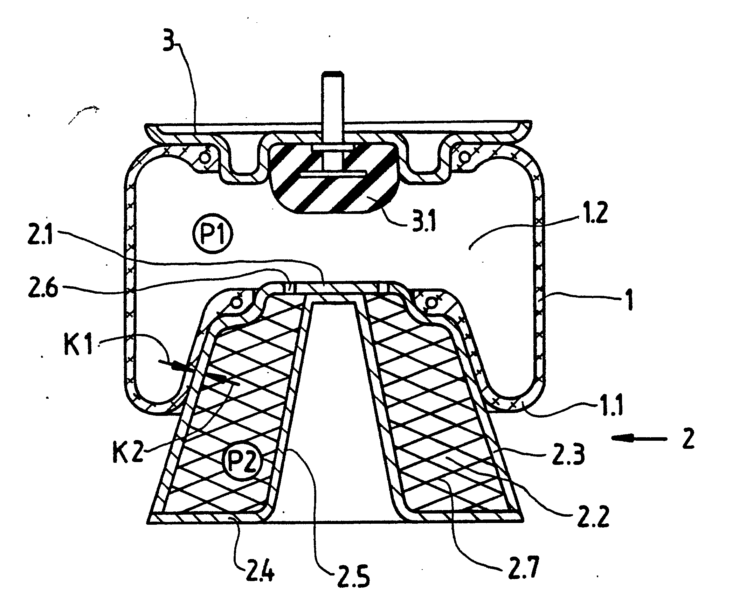

Die beigefügte Zeichnung veranschaulicht die Erfindung in vereinfachter, nicht maßstäblicher Darstellung anhand eines Ausführungsbeispieles:

Die dargestellte erfindungsgemäße Rollbalg-Luftfeder weist einen zwischen zwei Befestigungsflanschen 2 und 3 eingespannten, aus elastomerem Werkstoff mit oder ohne Verstärkungseinlagen gebildeten Rollbalg 1 auf. Der Befestigungsflansch 2 ist zu einem Abrollkolben ergänzt, an dessen Mantelwandung 2.3 sich die Rollfalte 1.1 des Rollbalges 1 abstützt. Der Abrollkolben 2 ist nach unten mittels der Verschlußplatte 2.4 luftdicht verschlossen, wobei im dargestellten Ausführungsbeispiel an die Verschlußplatte ein konischer Stempel 2.5 einstükkig angeformt ist, über sich der obere Mittelteil 2.1 des Abrollkolbens 2 gegenüber der Verschlußplatte 2.4 abstützt.

Die Innenräume 1.2 des Rollbalges 1 und 2.2 des Abrollkolbens 2 stehen über Öffnungen 2.6 miteinander in Verbindung, so daß der Innendruck P1 des Rollbalges praktisch mit dem Innendruck P2 des Abrollkolbens übereinstimmt. Da der Innendruck P2 an der Mantelwandung 2.3 nach außen gerichtete Kräfte K2 erzeugt, die den von außen auf die Mantelwandung einwirkenden Kräften, und zwar insbesondere der Abstützkraft K1 der Rollfalte 1.1 des Rollbalges 1 entgegengerichtet sind, ist die Mantelwandung 2.3 des Abrollkolbens 2 erfindungsgemäß bezüglich ihrer mechanischen Festigkeitswerte in dem Maße unterdimensioniert, in dem die Gegenkräfte K2 die Mantelwandung 2.3 abstützend entlasten. Da die damit erzeugte Entlastung - zumindest bezüglich der in Richtung der Flächenormalen wirkenden Kräfte - tatsächlich sehr weitgehend wirksam wird, ist die erzielte Einsparung an Gewicht und Wandungsmaterial beträchtlich. Der Innendruck in Rollbalg-Luftfedern, der erfindungsgemäß zur gezielten Reduzierung der Festigkeit der Mantelwandung 2.3 des Abrollkolbens 2 ausgenutzt wird und der im statischen Zustand beispielsweise ca. 5 bar beträgt, kann nämlich im dynamischen Betrieb auf das 2- bis 3-fache dieses Wertes ansteigen, was es plausibel erscheinen läßt, daß bei einer erfindungsgemäß konzipierten Rollbalg-Luftfeder die Mantelwandung des Abrollkolbens im Vergleich zu derjenigen bekannter, konventionell ausgelegter Rollbalg-Luftfedern um bis zu 50% unterdimensioniert werden konnte, ohne daß Einbußen der Belastbarkeit in Kauf genommen werden mußten.

Lediglich zur Ergänzung der stützenden Wirkung des Abrollkolben-Innendruckes P2 weist die dargestellte Rollbalg-Luftfeder für den Fall extremer Belastungsspitzen und/oder anomaler Wirkrichtungen der auftretenden Belastungskomponenten im Innenraum 2.2 des Abrollkolbens ein Stützgerüst 2.7 auf, das den Abrollkolben auch gegen seitliche Verformungen aussteift und das ferner eine Überlastung des Stempels 2.5 verhindert, falls es infolge Druckverlustes im Rollbalg-Innenraum oder bei extremen Einfederungsbewegungen zum Aufsetzen des Puffers 3.1 auf den oberen Mittelteil 2.1 des Abrollkolbens kommt.

## Ansprüche

1. Rollbalg-Luftfeder mit einem zwischen Befestigungsflanschen (2, 3) eingespannten, aus elastomerem Werkstoff mit oder ohne Verstärkungseinlagen gebildeten Rollbalg (1), wobei mindestens einer der Befestigungsflansche zu einem Abrollkolben (2) ergänzt ist, an dessen Mantelwandung (2.3) sich eine Rollfalte (1.1) des Rollbalges (1) beim Einfedern abstützt, **dadurch gekennzeichnet,** daß der Innenraum (2.2) des Abrollkolbens (2) in an sich bekannter Weise mit einem luftdichten Verschluß (2.4) versehen ist und mit dem Innenraum (1.2) des Rollbalges (1) über mindestens eine Öffnung (2.6) in Druckverbindung steht und daß die Mantelwandung (2.3) des Abrollkolbens (2) bezüglich ihrer mechanischen Festigkeitswerte im Vergleich zu den im Bereich der Abrollfalte (1.1) auf sie einwirkenden Kräften (K1) in dem Maße unterdimensioniert ist, in dem diese Kräfte (K1) durch die durch den Innendruck (P2) des Abrollkolbens (2) an der Mantelwandung (2.3) erzeugten Gegenkräfte (K2) kompensiert werden.

2. Rollbalg-Luftfeder nach Anspruch 1, dadurch gekennzeichnet, daß der Abrollkolben aus einem thermoplastischen oder duroplastischen Kunststoff gebildet ist.

3. Rollbalg-Luftfeder nach Anspruch 2, dadurch gekennzeichnet, daß der Kunststoff durch in ihn eingelagerte Fasern, insbesondere Glasfasern, verstärkt ist.

4. Rollbalg-Luftfeder nach einem der Ansprüche 1 bis 3, dadurch gekennzeichnet, daß die Fasern überwiegend in Umfangsrichtung der Mantelwandung (2.3) des Abrollkolbens (2) verlaufen.

5. Rollbalg-Luftfeder nach einem der Ansprüche 1 bis 4, dadurch gekennzeichnet, daß sich der Abrollkolben (2) an seinem Mittelteil (2.1) über einen Stempel (2.5) gegen den Verschluß (2.4) abstützt, wobei der Stempel (2.5) konisch, sich vom Verschluß (2.4) zum Mittelteil (2.6) verjüngend, ausgebildet ist.

6. Rollbalg-Luftfeder nach Anspruch 5, dadurch gekennzeichnet, daß einerseits die Mantelwandung (2.3) und der Mittelteil (2.1) sowie andererseits der Verschluß (2.4) und der Stempel (2.5) jeweils einstückig geformt und die beiden Formteile dichtend miteinander verbunden sind.

7. Rollbalg-Luftfeder nach einem der Ansprüche 1 bis 6, dadurch gekennzeichnet, daß die den Abrollkolben-Innenraum (2.2) mit dem Rollbalg-Innenraum (1.2) verbindende(n) Öffnung(en) (2.6) als schwingungsdämpfende Strömungsdrossel(n) ausgebildet ist (sind).

8. Rollbalg-Luftfeder nach einem der Ansprüche 1 bis 7, dadurch gekennzeichnet, daß der Innenraum (2.2) des Abrollkolbens (2) ein formsteifes Stützgerüst (2.7) enthält.

9. Rollbalg-Luftfeder nach Anspruch 8, dadurch gekennzeichnet, daß das Stützgerüst (2.7) durch einen offenporigen Hartschaum gebildet ist.

10. Rollbalg-Luftfeder nach Anspruch 8, dadurch gekennzeichnet, daß das Stützgerüst (2.7) durch harte, unter Freilassung miteinander in Verbindung stehender Zwischenräume dicht gepackte Partikel gebildet ist.